# EUROPÄISCHE PATENTSCHRIFT

(11) **EP 2 800 981 B1**
(45) Veröffentlichungstag und Bekanntmachung des Hinweises auf die Patenterteilung: **19.09.2018**
(21) Anmeldenummer: 12805954.0
(22) Anmeldetag: 26.11.2012
(51) Int. Cl.: G01S 7/524, G01S 15/93, H04B 3/54, H04B 14/02, G01S 7/00

(54) **VERFAHREN UND VORRICHTUNG ZUR ÜBERTRAGUNG MINDESTENS EINER VORBESTIMMTEN SIGNALFORM AN EINE RÄUMLICH ABGESETZTE SENDEEINRICHTUNG**
METHOD AND DEVICE FOR TRANSMITTING AT LEAST ONE SPECIFIED SIGNAL FORM TO A SPATIALLY REMOTE TRANSMITTING DEVICE
PROCÉDÉ ET DISPOSITIF PERMETTANT DE TRANSMETTRE AU MOINS UNE FORME DE SIGNAL PRÉDÉFINIE À UN DISPOSITIF ÉMETTEUR SITUÉ À DISTANCE

(30) Priorität: 02.01.2012 DE 102012200020
(43) Veröffentlichungstag der Anmeldung: 12.11.2014
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2012/073600
(87) Internationale Veröffentlichungsnummer: WO 2013/102517

(56) Entgegenhaltungen:
- DE-A1- 3 519 709
- DE-A1-102008 044 351
- DE-A1-102008 046 171
- DE-B3-102005 014 133
- FR-A1- 2 708 360
- US-A- 4 524 356
- US-B1- 6 744 820

## Beschreibung

### Bereich der Erfindung

Die vorliegende Erfindung betrifft ein Verfahren zur Übertragung mindestens einer vorbestimmten Signalform von einer Steuereinrichtung an eine räumlich abgesetzte und zum Aussenden mindestens eines Signals mit der vorbestimmten Signalform eingerichtete Sendeeinrichtung, wobei die vorbestimmte Signalform über mindestens eine Versorgungsleitung der Sendeeinrichtung übertragen wird. Auch betrifft die Erfindung eine Vorrichtung zum Durchführen des erfindungsgemäßen Verfahrens. Ferner betrifft die Erfindung ein Fahrerassistenzsystem mit der erfindungsgemäßen Vorrichtung.

### Stand der Technik

Zur akustischen Umfelderfassung von Fahrzeugen werden heute üblicherweise Systeme im Ultraschallbereich, insbesondere pulsweise messende Systeme, verwendet. Dabei werden typischerweise alle 10 bis 300 ms über einen Elektro-Akustik-Wandler akustische Pulse bei circa 50 kHz ausgesendet. Aus der Laufzeit der von den sendenden und insbesondere auch von den nicht sendenden Wandlern empfangenen und an den Objekten der Umgebung reflektierten akustischen Pulse wird auf die Objektabstände im Raum geschlussfolgert.

Bekanntermaßen ist man bei der Auswahl des akustischen Mediums nicht unbedingt auf Ultraschall um 50 kHz beschränkt. Die an einem Fahrzeug angebrachten Sensoren zur akustischen Umfeldüberwachung, die sowohl im Ultraschallbereich als auch im akustischen Bereich des menschlichen Gehörs arbeiten, müssen aufgrund ihrer Funktionsweise mit dem Medium Luft auf der Außenhaut des Fahrzeugs in Verbindung stehen. Dazu werden sie üblicherweise entweder auf der Fahrzeugaußenhaut oder aber verdeckt in der Nähe der Fahrzeugaußenhaut verbaut. Diese Anforderung führt zu Konflikten mit den Designvorstellungen der Fahrzeugdesigner. Zur Abhilfe wird daher eine Splittechnologie verwendet, bei der die Akustik-Elektro-Wandler in/an der Fahrzeugaußenhaut untergebracht werden und bei der mehrere solche baulich/räumlich abgesetzte Sensoren mittels mindestens eine Steuer- und Verarbeitungseinheit (SG) ansteuert werden, die insbesondere auch die Empfangssignale dieser Sensoren verarbeitet. Wahlweise können die Sensoren akustische Signale senden und/oder empfangen. Verschiedene Konzepte dafür sind aus dem Dokument DE 10 2008 044 351 A1 bekannt. Eine einfache Strategie liegt dabei darin, die Sensoren als passive Bauelemente auszugestalten, sodass sie jeweils mit einer Zweidrahtleitung an die Steuer- und Verarbeitungseinheit angeschlossen werden können. Passive Architekturen sind jedoch mit erhöhten Risiken bezüglich der Einstrahlung und der Abstrahlung elektromagnetischer Wellen verbunden, sodass deren abgebbare akustische Schallleistung im Allgemeinen geringer gegenüber der abgebbaren Schalleistung von aktiven Sensoren mit Energiespeicher und Endstufe ist, die räumlich abgesetzt sind.

Aktive Sensoren benötigen neben der Energieübertragung auch Möglichkeiten zur Übertragung der auszusenden Signalform und der empfangenen Echopulse. Heutzutage sind daher viele abgesetzte aktive Sensoren, die akustisch senden, mit mehr als zwei Leitungen an der Steuer- und Verarbeitungseinheit (SG) angeschlossen. Aus dem Stand der Technik sind neben Sensoren mit den zwei Leitungen für die Energieversorgung beispielsweise auch Sensoren mit einer dritten Leitung zur Übertragung der Signalform zu dem abgesetzten Sensor und auch welche mit einer vierten Leitung zur Übertragung der Empfangssignale von dem abgesetzten Sensor zu der Steuer- und Verarbeitungseinheit (SG) bekannt.

Alternativ gibt es am Markt einfache Systeme mit abgesetzten, aktiv arbeitenden Ultraschallsensoren, die zwar über eine kabelsparende Zweidrahtleitung angeschlossen sind, bei denen jedoch zur Übertragung der auszusendenden Signalformen die Spannung an der Zweidrahtversorgungsleitung binär ein- und ausgeschaltet wird. Dabei hat die Spannung auf der Zweidrahtleitung nur zwei Zustände. Eine Schaltungsanordnung zur Informationsübertragung auf eine Zweidrahtleistung, bei der durch Ein- und Ausschalten der Betriebsspannung Spannungs- und Stromimpulse für die zu übertragenen kodierten Informationen erzeugt werden, ist aus dem Dokument DE 43 33 358 B4 bekannt. Nachteilig dabei ist, dass durch das Ein- und Ausschalten der Spannung an der Zweidrahtversorgungsleitung während des Sendens nur die Hälfte der Zeit Strom zum abgesetzten Sensor fließen kann.

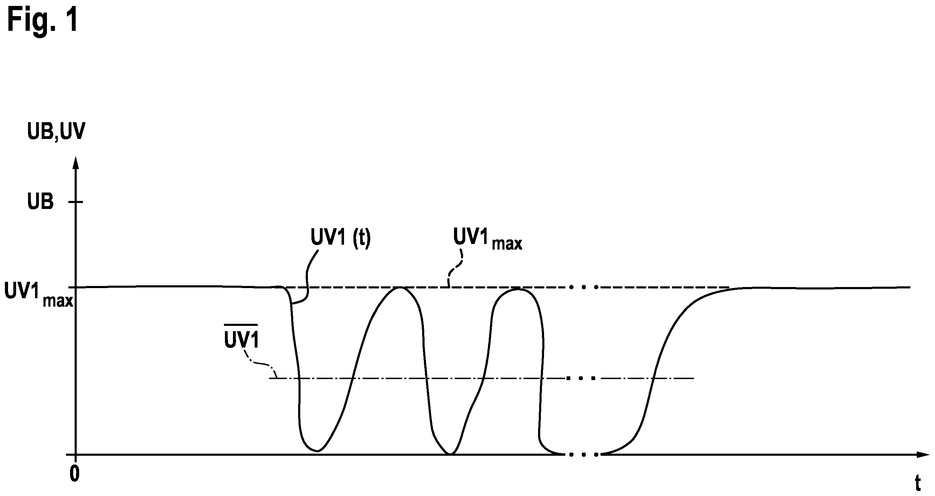

Figur 1 zeigt ein Spannungs-Zeit-Diagramm einer Übertragung einer auszusendenden Signalform zu einem abgesetzten Sensor gemäß einem aus dem Stand der Technik bekannten System. In der Figur 1 sind die Batteriespannung UB zur Energieversorgung einer Steuereinrichtung zum Steuern eines abgesetzten Sensors und die Versorgungsspannung UV des abgesetzten Sensors in Abhängigkeit von der Zeit t dargestellt. Dabei ist der zeitabhängige Versorgungsspannungsverlauf für einen abgesetzten Sensor mit dem Bezugszeichen UV1(t) bezeichnet. Bei diesen heute üblichen Systemen wird die zur Energieversorgung der Steuer- und Verarbeitungseinheit nötige Batteriespannung UB von typischerweise 9 bis 16 V mittels eines Spannungsreglers auf eine konstante maximale Versorgungsspannung UV1ₘₐₓ von typischerweise 8V geregelt.

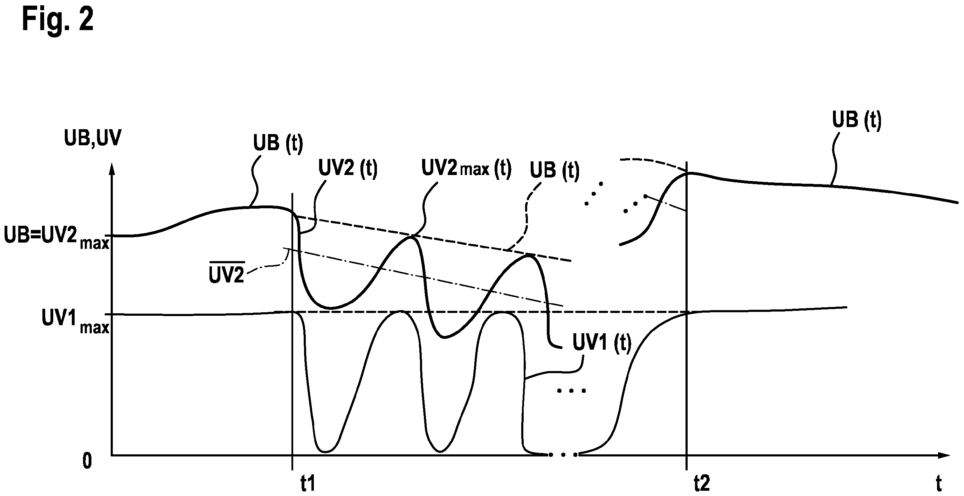

Aufgrund der Verwendung einer konstanten maximalen Versorgungsspannung UV1ₘₐₓ von typischerweise 8V kann im Stand der Technik zwar die Endstufe relativ einfach gestaltet werden, andererseits ist aber eine Reduktion auf 8V mit dauerhaftem Energieverlust verbunden. Da die maximal abgebare Sendeleistung einer Endstufe von der Versorgungsspannung abhängt, reduziert sich durch die Versorgungsspannungsreduktion auch die von diesen Sensoren abgebbare Sendeleistung. Neben der üblichen Speicherkapazität eines abgesetzten Sensors, die zumeist mittels eines Kondensators realisiert wird, wird die mittlere Sendeleistung des Sensors im Wesentlichen durch die während des Sendens anliegende mittlere Versorgungsspannung bestimmt. Die mittlere Versorgungsspannung U̅V̅1̅ wird in der Figur 2 durch eine Strich-Punkt-Linie dargestellt.

Ferner ist aus dem Dokument DE 42 02 568 A1 eine Polarisator-Steuerung für eine Satelliten-Empfangsantenne bekannt, bei der von einem Satelliten-Tuner eine Information an einen Konverter durch ein Gleichspannungssignal übertragen wird, das einen in seiner Höhe steuerbaren Signalpegel aufweist. In einer bevorzugten Ausführungsform wird dort das Steuersignal als ein moduliertes Signal übertragen, wobei der Steueranteil auf den konstanten Gleichspannungspegel aufgesetzt wird. Jedoch schwankt hierbei der Gleichspannungswert mit dem Steuersignal, je nach Größe, zwischen 14,5 und 15,5 V.

Das Dokument US 4 524 356 A beschreibt ein Verfahren zur Abstandswarnung in einem Fahrzeug, bei dem ein Ultraschallsensor über einen Zweidrahtbus mit einer Steuereinrichtung verbunden ist. Die Steuereinrichtung startet am Sensor die Aussendung eines Ultraschallbursts, wobei der Sensor nach der Detektion des reflektierten Bursts einen Puls an die Steuereinrichtung zurücksendet.

### Offenbarung der Erfindung

Erfindungsgemäß wird ein Verfahren zur Übertragung mindestens einer vorbestimmten Signalform von einer Steuereinrichtung an eine räumlich abgesetzte Sendeeinrichtung, die zum Aussenden mindestens eines Signals mit der vorbestimmten Signalform eingerichtet ist, bereitgestellt, wobei die vorbestimmte Signalform über mindestens eine Versorgungsleitung der Sendeeinrichtung übertragen wird. Zur Übermittlung der vorbestimmten Signalform wird die Spannung auf der Versorgungsleitung der Sendeeinrichtung mittels der Steuereinrichtung um einen Bruchteil der maximalen Versorgungsspannung der Sendeinrichtung variiert.

Ferner wird erfindungsgemäß eine Vorrichtung zum Durchführen des Verfahrens geschaffen. Die erfindungsgemäße Vorrichtung umfasst mindestens eine räumlich abgesetzte Sendeeinrichtung zum Aussenden mindestens eines akustischen oder elektromagnetischen Signals und eine Steuereinrichtung, die dazu ausgebildet ist, eine derartig modulierte Versorgungsspannung für die Sendeeinrichtung insbesondere mittels eines Leitungstreibers zum Treiben der mindestens einen Versorgungsleitung der Sendeeinrichtung zu erzeugen, dass die Steuereinrichtung eine für das von der Sendeeinrichtung auszusendende Signal vorbestimmte Signalform mittels der modulierten Versorgungsspannung an die Sendeeinrichtung über die Versorgungsleitung der Sendeeinrichtung überträgt.

Die Unteransprüche zeigen bevorzugte Weiterbildungen der Erfindung.

Anders ausgedrückt, es wird bei dem erfindungsgemäßen Verfahren mindestens eine auszusendende Signalform an einen räumlich abgesetzten Sensor, dessen Versorgungsspannung UVₘₐₓ beträgt, von der Steuereinrichtung über die Energieversorgungsleitungen des Sensors an die Sendeeinrichtung übermittelt. Dabei wird zur Übermittlung der Signalform die Spannung auf der Versorgungsleitung nur um einen Bruchteil der maximalen Versorgungsspannung des Sensors variiert.

Vorteilhaft wird durch das erfindungsgemäße Verfahren ermöglicht, mindestens eine auszusendende Signalform von einer Steuereinrichtung an zumindest eine räumlich abgesetzte Sendeeinrichtung beziehungsweise an einen räumlich abgesetzten Sensor mit möglichst wenig Oberwellen zu übertragen. Dabei sendet der räumlich abgesetzte Sensor ein Signal mit der übertragenen Signalform aus. Die auszusendende Signalform kann mittels des erfindungsgemäßen Verfahrens auch an aktiv arbeitenden, räumlich abgesetzten Sensoren, die vorzugsweise nur über eine Zweidrahtleitung angeschlossen sind, in einfacher und störungsarmer Weise übertragen werden.

Durch die erfindungsgemäße Übertragung der auszusendenden Signalform an den abgesetzten Sensor können kostensparende abgesetzte Sensoren verwendet werden, die keinen Signalformspeicher aufweisen müssen. Mittels des erfindungsgemäßen Verfahrens können räumlich abgesetzte Sensoren situationsabhängig und störungsarm unterschiedlichste Signalformen aussenden. Die Aussendung von unterschiedlichen Signalformen ist notwendig, wenn ein verwendetes Messverfahren dies erfordert, beispielsweise zur Individualisierung der Aussendungen von verschiedenen Sensoren, und/oder wenn eine Nachjustierung technischer Parameter von Sensoren durchgeführt werden muss, beispielsweise infolge von Alterung.

Erfindungsgemäß kann die maximale Versorgungsspannung des Sensors vor und insbesondere auch während der Übermittlung der auszusendenden Signalform auf die Batteriespannung zur Energieversorgung der Steuereinrichtung eingeregelt werden. Aufgrund der Erhöhung der maximalen Versorgungsspannung des Sensors auf die maximal zur Verfügung stehende Batteriespannung zur Energieversorgung der Steuereinrichtung wird die von der Versorgungsspannung des Sensors abhängige, maximal abgebbare Sendeleistung des Sensors deutlich erhöht.

Bei einer besonders einfach realisierbaren Ausführungsform der Erfindung wird zur Übertragung der vorbestimmten Signalform die Versorgungsspannung abgesenkt, Vorzugsweise wird die Versorgungsspannung dabei nicht bis auf Null abgesenkt. Ferner kann eine vorbestimmte Stärke des von der Sendeeinrichtung auszusendenden Signals in besonders einfacher Weise mittels eines Mittelwertes und/oder eines Extremwertes wie eines Maximumwertes oder eines Minimumwertes der Versorgungsspannung der Sendeeinrichtung während der Übertragung der vorbestimmten Signalform vorgegeben werden.

Anders ausgedrückt, es wird erfindungsgemäß die Stärke der vom Sensor ausgesendeten Signale durch den Mittelwert der Versorgungsspannung während der Übertragung der Signalformen mitgeteilt und die Versorgungsspannung zur Übertragung der Signalform insbesondere nicht bis auf Null abgesenkt. Vorzugsweise wird die Stärke der vom Sensor ausgesendeten Signale erfindungsgemäß durch den Maximalwert der Versorgungsspannung während der Übertragung der Signalformen vorgegeben.

Bei einer besonders bevorzugten Ausführungsform der Erfindung wird von der Sendeeinrichtung mindestens ein akustisches oder elektromagnetisches Signal mit der vorbestimmten Signalform und/oder Signalstärke ausgesendet.

Mit anderen Worten, es wird die übertragene Signalform als akustisches Signal, beispielsweise im Ultraschallbereich, ausgegeben. Ferner wird erfindungsgemäß ein Trägersignal, das elektromagnetische Wellen insbesondere mit bestimmten Frequenzen umfasst, durch ein Modulationssignal mit der übertragenen Signalform beeinflusst, insbesondere moduliert. Das Trägersignal kann vorzugsweise einen Lichtstrom, wie beispielsweise Laserlicht oder Radarwellen umfassen.

Bei dem erfindungsgemäßen Verfahren wird die Übertragung von Signalformen, die als akustische Signale im Ultraschalbereich und/oder im menschlichen Hörbereich ausgesandt werden sollen, besonders bevorzugt. Das erfindungsgemäße Verfahren eignet sich jedoch auch für die Übertragung von Signalformen für andere bei bekannten Messtechniken vorkommenden Messmedien, wie beispielsweise für optische Messtechnik, bei der die übertragene Signalform insbesondere eine Helligkeitsmodulation des ausgesandten Lichts und/oder eine Veränderung der Wellenlänge des auszusendenden Lichts bewirkt. Äquivalent kann das erfindungsgemäße Verfahren auch allgemein für die Übertragung der Signalformen bei Sensoren verwendet werden, die elektromagnetische, insbesondere Radarwellen ausstrahlen.

Bei einer besonders vorteilhaften Ausführungsform der Erfindung werden die von der Steuereinrichtung übertragene vorbestimmte Signalform und/oder die vorbestimmte Stärke vor dem Aussenden des von der Sendeeinrichtung auszusendenden Signals zwischengespeichert. Ferner wird das von der Sendeeinrichtung auszusendende Signal insbesondere zeitversetzt gegenüber dem Zeitpunkt der Übertragung der vorbestimmten Signalform und/oder Stärke ausgesendet.

Mit anderen Wörtern werden die von dem Sensor ausgesendeten Signale zeitversetzt gegenüber dem Zeitpunkt, an dem die gewünschte Signalform zum Sensor hin übertragen wurde, ausgesendet. Insbesondere werden die vom Sensor auszusendenden Signale beispielsweise mittels einer vereinbarten Verzögerung ausgesendet, oder mittels eines separaten Initialisierungssignals, wie zum Beispiel ein Pulses, oder sie werden mit einer anderen Geschwindigkeit ausgesendet. Die bei der Aussendung der Sensorsignale und bei der Übertragung der auszusendenden Signalform hin zum Sensor vorkommenden Geschwindigkeiten unterscheiden sich beispielsweise um einen Faktor zwei beim akustischen Replay oder um einen Faktor zigtausend beim Radar.

Für die Zwischenspeicherung der Signalform kann insbesondere eine übliche Abtastung verwendet werden, die beispielsweise mittels mindestens eines Schwellwertschalters aus Binärsignalen gewonnen werden kann.

Erfindungsgemäß lassen sich Sensoren besonders preiswert realisieren, wenn die übertragenen Signalformen ohne Zwischenspeicher unmittelbar über die Sendeeinrichtung ausgesandt werden. In diesem Fall benötigt der abgesetzte Sensor keinen Speicher und auch keine genaue Zeitbasis. Dabei würde mindestens eine einfache Kondensator-Widerstand-Kombination als Zeitbasis reichen. Erfindungsgemäß wird jedoch die Nutzung von Zwischenspeichern nicht ausgeschlossen. Beispielsweise könnte eine einmal übermittelte Signalform mehrfach ohne erneute Übermittlung ausgesandt werden. Dies gilt auch dann, wenn wegen der elektromagnetischen Verträglichkeit und/oder der elektromagnetischen Energie im Sensor eine Verzögerung stattfindet. Auch durch unterschiedliche Übermittlungsgeschwindigkeiten bei der Übertragung der Signalformen und Abspielgeschwindigkeiten beim Aussenden der Signalformen kann die elektromagnetische Verträglichkeit positiv beeinflusst werden.

Des Weiteren wird erfindungsgemäß eine Vorrichtung mit mindestens einem Detektor, insbesondere mit einem Maximumwertdetektor und/oder einem Minimumwertdetektor, bereitgestellt. Dabei ist der Detektor dazu ausgebildet, Informationen über den Verlauf der Spannung auf der Versorgungsleitung zu ermitteln. Die erfindungsgemäße Vorrichtung umfasst ferner eine Verarbeitungsvorrichtung, die dazu ausgebildet ist, zumindest eine vorbestimmte Signalstärke des von der Sendeeinrichtung auszusendenden Signals anhand der ermittelten Informationen über den Verlauf der insbesondere mittels einer Signalaufbereitungseinrichtung vorgefilterten Spannung auf der Versorgungsleitung zu bestimmen.

Vorzugsweise umfasst die erfindungsgemäße Vorrichtung weiterhin eine Referenzeinrichtung, die dazu ausgebildet ist, die vorbestimmte Signalform und/oder Signalstärke des mittels der Sendeeinrichtung auszusendenden Signals mittels des Referenzsignals und mittels der ermittelten Informationen über den Verlauf der Spannung auf der Versorgungsleitung zu bestimmen.

Gemäß einer Ausführungsform wird eine Vorrichtung zur Realisierung eines erfindungsgemäßen Verfahrens bereitgestellt, bei der die die Signalform einprägenden Einheit einen Leitungstreiber zum Treiben bzw. Ansteuern der Versorgungsleitungen eines abgesetzten Sensors umfasst. Ferner umfasst die erfindungsgemäße Vorrichtung eine vom Sensor umfasste Energieversorgungseinrichtung zur Versorgung des Sensors, mindestens einen Detektor, insbesondere einen Maximalwertdetektor und/oder einen Minimalwertdetektor, der dazu ausgebildet ist, den Verlaufes der Spannung auf der Versorgungsleitung zumindest teilweise zu erkennen, eine Referenzsignalerzeugung und eine Endstufe (Verarbeitungsvorrichtung) zur Bestimmung der Signalform und der Stärke des auszusendenden Signals anhand eines Referenzsignals und des Verlaufes des insbesondere mittels einer Vorfilterung (Signalbearbeitungseinrichtung) aufbereiteten Spannung auf der Versorgungsleitungen des Sensors.

Auch wird erfindungsgemäß ein Fahrerassistenzsystem bereitgestellt, dass die erfindungsgemäße Vorrichtung umfasst.

### Kurze Beschreibung der Zeichnungen

Nachfolgend werden Ausführungsformen der Erfindung unter Bezugnahme auf die begleitenden Zeichnungen im Detail beschrieben. In den Zeichnungen ist:
- Figur 1: ein zeitabhängiger Versorgungsspannungsverlauf für einen abgesetzten Sensors während einer Übertragung einer auszusendenden Signalform über die Versorgungsleitungen des Sensors gemäß dem Stand der Technik,
- Figur 2: ein zeitabhängiger Versorgungsspannungsverlauf für einen abgesetzten Sensors während einer Übertragung einer auszusendenden Signalform über die Versorgungsleitungen des Sensors nach einer ersten Ausführungsform der Erfindung im Vergleich zu dem in der Figur 1 dargestellten Versorgungsspannungsverlauf,
- Figur 3: ein zeitabhängiger Versorgungsspannungsverlauf für einen abgesetzten Sensors während einer Übertragung einer auszusendenden Signalform über die Versorgungsleitungen des Sensors nach einer zweiten Ausführungsform der Erfindung,
- Figur 4: ein zeitabhängiger Versorgungsspannungsverlauf für einen abgesetzten Sensor während der Übertragung einer auszusendenden Signalform über die Versorgungsleitungen des Sensors nach einer dritten Ausführungsform der Erfindung,
- Figur 5: ein zeitabhängiger Versorgungsspannungsverlauf für einen abgesetzten Sensor während der Übertragung einer auszusendenden Signalform über die Versorgungsleitungen des Sensors nach einer vierten Ausführungsform der Erfindung,
- Figur 6: ein zeitabhängiger Versorgungsspannungsverlauf für einen abgesetzten Sensor während der Übertragung einer auszusendenden Signalform über die Versorgungsleitungen des Sensors nach einer fünften Ausführungsform der Erfindung,
- Figur 7: ein Prinzipschaltbild einer erfindungsgemäßen Vorrichtung zum Durchführen des erfindungsgemäßen Verfahrens nach einer sechsten Ausführungsform der Erfindung, und
- Figur 8: ein detailliertes Prinzipschaltbild der Endstufe der erfindungsgemäßen Vorrichtung aus Figur 7.

### Ausführungsformen der Erfindung

In der Figur 2 sind auf der Ordinate die Batteriespannung zur Energieversorgung einer erfindungsgemäßen Steuereinrichtung zum Steuern eines abgesetzten Sensors und die Versorgungsspannung für den abgesetzten Sensor und auf der Abszisse die Zeit t dargestellt. Figur 2 zeigt einen zeitabhängigen Verlauf der Versorgungsspannung UV2(t) für einen abgesetzten Sensor bei der Übertragung einer auszusendenden Signalform über die Versorgungsleitungen des Sensors nach einer ersten Ausführungsform der Erfindung im Vergleich zu dem entsprechenden in der Figur 1 dargestellten Versorgungsspannungsverlauf UV1(t) nach dem Stand der Technik. Dabei wird in Figur 2 mittels einer kontinuierliche Linie bis zum Zeitpunkt t1 des Beginnes des Übertragens der Signalform sowie ab dem Zeitpunkt t2 des Endes des Übertragens der Signalform und dazwischen mittels einer gestrichelten Linie den Zeitverlauf der Batteriespannung UB(t) mit übertrieben starken Schwankungen dargestellt.

Die Batteriespannung UB(t) ist meist zeitabhängig. Der Zeitverlauf der maximalen Batteriespannung UBₘₐₓ(t) entspricht meistens in etwa dem Zeitverlauf der Batteriespannung UB(t), das heißt, dass die Approximation UVₘₐₓ(t) ≈ UB(t) als gültig anzusehen ist. Mittels einer kontinuierlichen Linie ist auch der Verlauf der Versorgungsspannung UV2(t) für den abgesetzten Sensor gemäß einem Verfahren nach einer ersten Ausführungsform der Erfindung dargestellt. Dabei wird gemäß dem Verfahren nach der ersten Ausführungsform der Erfindung nur einen Bruchteil der während der Übertragung maximal anliegende Versorgungsspannung UV2ₘₐₓ(t) zur Modulation der zu übertragenden Signalform verwendet.

Nach der ersten Ausführungsform der Erfindung orientiert sich die maximale Versorgungsspannung UV2ₘₐₓ(t) insbesondere am Verlauf der Batteriespannung UB(t). Insbesondere dann, wenn keine Signalformen oder andere Informationen über die Versorgungsleitung übertragen werden, entspricht der Verlauf der Versorgungsspannung UV2(t) für den abgesetzten Sensor dem Verlauf der Batteriespannung UB(t), bis auf die üblichen Glättungen, dem Anschneiden von Spannungsspitzen und Knacksignalen infolge von Laständerungen elektrischer Verbraucher. In erster Nährung kann die Approximation UV2ₘₐₓ(t) ≈ UB(t) als gültig angesehen werden. Das erfindungsgemäße Verfahren nach der ersten Ausführungsform der Erfindung ist jedoch auch für UV2ₘₐₓ(t) < UB(t) gültig.

Gemäß dem Verfahren nach der ersten Ausführungsform erstreckt sich der Signalhub nicht über den gesamten Spannungsbereich von UV2ₘₐₓ(t). In der speziellen Ausprägung aus der Figur 2 ist der Signalverlauf UV2(t) der zu übertragenden Signalform relativ zu dem durch den Batteriespannungsverlauf UB(t) vorgegebenen Verlauf der maximalen Sensorversorgungsspannung UV2ₘₐₓ(t) dargestellt.

In der Figur 2 ist mit einer Strich-Punkt-Linie der Verlauf des Mittelwertes der Sensorversorgungsspannung U̅V̅2̅ während der Signalformübertragung zwischen den Zeitpunkten t1 und t2 dargestellt.

Erfindungsgemäßen kann der Versorgungsspannungsmittelwert U̅V̅2̅ zur Steuerung der Signalstärke eines von einer Abstrahleinrichtung (Sendeeinrichtung) ausgestrahlten Signals verwendet werden.

Gleiche Größen sind in den Figuren 1 und 2 mit den gleichen Bezugszeichen gekennzeichnet. Das gilt auch für die folgenden Figuren.

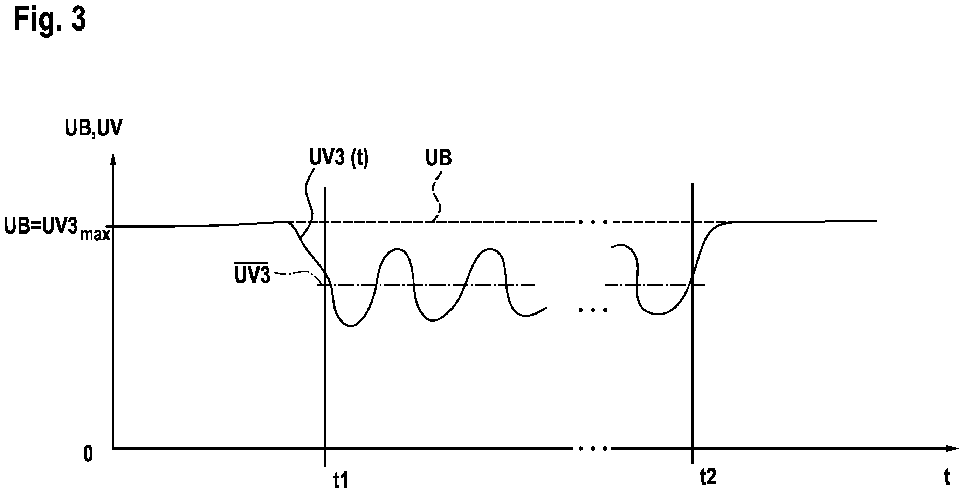

In der Figur 3 ist mit UV3(t) der zeitabhängige Versorgungsspannungsverlauf für einen abgesetzten Sensor bei der Übertragung einer auszusendenden Signalform über die Versorgungsleitungen des Sensors nach einer zweiten Ausführungsform der Erfindung gekennzeichnet.

Figur 3 zeigt den Verlauf der Versorgungsspannung UV3(t) mit einem im Vergleich zu der Figur 2 reduzierteren Versorgungsspannungsmittelwert U̅V̅3̅ während der Übertragung der auszusendenden Signalform, was bevorzugt zu einer reduzierten Stärke des auszusendenden Signals führt. In einer alternativen Ausführung kann eine reduzierter Versorgungsspannungsmittelwert U̅V̅3̅ jedoch auch eine Erhöhung der Stärke des auszusenden Signals bewirken.

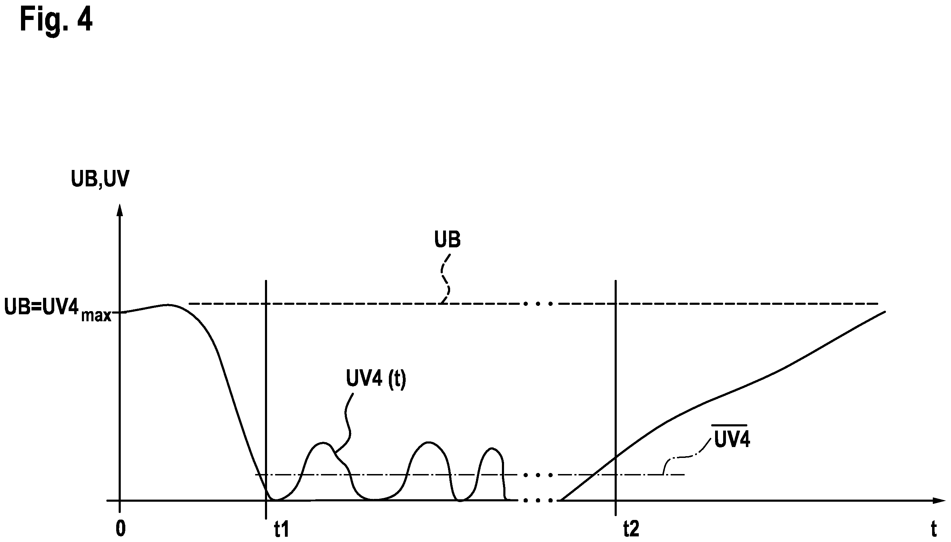

In der Figur 4 ist mit UV4(t) der zeitabhängige Versorgungsspannungsverlauf für einen abgesetzten Sensor bei der Übertragung einer auszusendenden Signalform über die Versorgungsleitungen des Sensors nach einer dritten Ausführungsform der Erfindung gezeigt.

Figur 4 zeigt den Verlauf der Versorgungsspannung UV4(t) mit einem im Vergleich zu der Figur 2 noch stärker als bei der Figur 3 reduzierten Versorgungsspannungsmittelwert U̅V̅4̅ während der Übertragung der auszusendenden Signalform, was zu einer noch stärker reduzierten Stärke des auszusendenden Signals als bei der Figur 3 führt.

Bei der in der Figur 4 dargestellten dritten Ausführungsform der Erfindung ist die ausgestrahlte Signalstärke sehr klein, weil sich der Versorgungsspannungsmittelwert U̅V̅4̅ während der Übertragung der auszusendenden Signalform stark von der vor der Übertragung maximal anliegenden Versorgungsspannung UV4ₘₐₓ(t=0) unterscheidet.

Umgekehrt ist bei der in der Figur 2 dargestellten erste Ausführungsform der Erfindung die ausgestrahlte Signalstärke sehr groß, weil sich der Versorgungsspannungsmittelwert U̅V̅2̅ während der Übertragung der auszusendenden Signalform nur gering von der vor der Übertragung maximal anliegenden Versorgungsspannung UV2ₘₐₓ(t=0) unterscheidet.

Vorteilhaft bei den in den Figuren 2, 3 und 4 dargestellten Ausführungsformen des erfindungsgemäßen Verfahrens ist unter anderem, dass wenn eine große beziehungsweise kleine Stärke des auszusendenden Signals benötigt wird, die während der Signalformübertragung verfügbare mittlere Versorgungsleistung U̅V̅ des Sensors entsprechend groß beziehungsweise klein ist.

Bei den in den Figuren 2, 3 und 4 dargestellten Ausführungsformen des erfindungsgemäßen Verfahrens schwankt die Versorgungsspannung UV(t) für den abgesetzten Sensor nur noch um einen Bruchteil der während der Übertragung der Signalform maximal anliegenden Versorgungsspannung UVₘₐₓ(t1 < t < t2), beispielsweise um 2 bis 4 V.

In den Figuren 3 und 4 erreicht der Verlauf von UV(t) zwischen den Übertragungszeitpunkten t1, t2 niemals UVₘₐₓ(t=0). Dabei wird zur Einstellung eines geeigneten Versorgungsspannungsmittelwertes U̅V̅ bereits vor der Übertragung der Signalform die Versorgungsspannung UV(t) abgesenkt und erst nach der Übertragung wieder angehoben. Das erfindungsgemäße Verfahren umfasst insbesondere auch eine Kombination der in den Figuren 2, 3 und 4 dargestellten Ausführungsformen der Erfindung.

Muss eine hohe Signalstärke von der Sendeeinrichtung des Sensors abgegeben werden, eignet sich zu Übermittlung der Signalstärke bevorzugt ein Verfahren gemäß der Darstellung aus der Figur 2 aufgrund der bei der Übertragung der auszusendenden Signalform vorkommenden hohen mittleren Versorgungsspannung U̅V̅2̅. In gleicher Weise eignet sich dann zur Übermittlung einer niedrigen Signalstärke bevorzugt ein Verfahren gemäß der Darstellung aus der Figur 4 aufgrund der bei der Übertragung der auszusendenden Signalform vorkommenden niedrigen mittleren Versorgungsspannung U̅V̅4̅.

Bei den in den Figuren 2,3 und 4 dargestellten Ausführungsformen der Erfindung werden also die Signalstärke durch die mittlere Versorgungsspannung U̅V̅ (t1 < t < t2) und die Signalfrequenz durch die Abweichung der Versorgungsspannung UV(t1 < t < t2) von der mittleren Versorgungsspannung U̅V̅ (t1 < t < t2) übertragen. Dabei wird, um eine verbesserte Störrobustheit zu erreichen, für die Abweichungen von UV(t1 < t < t2) von der mittleren Versorgungsspannung U̅V̅ (t1 < t < t2), das heißt, für die möglichen Amplituden, üblicherweise ein deutlicher Mindestwert von beispielsweise 2 bis 4 V eingestellt.

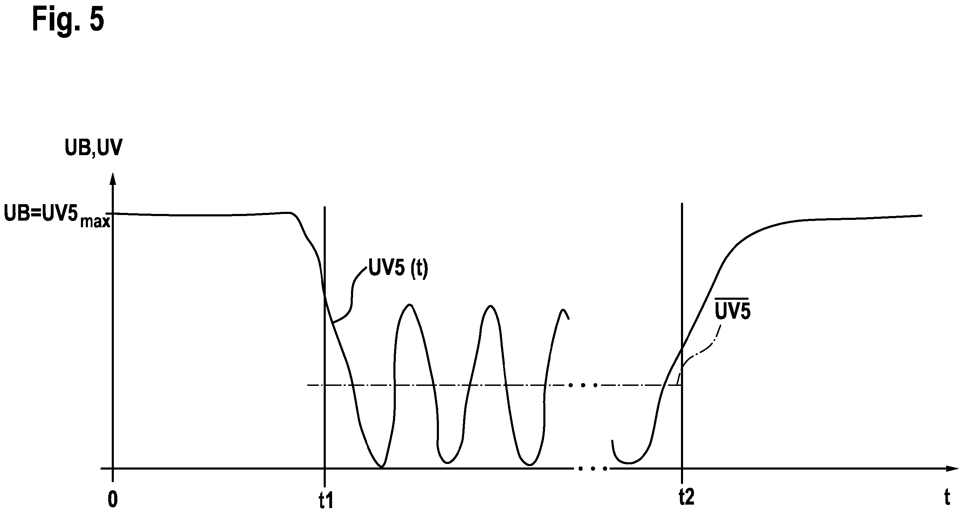

In der Figur 5 ist mit UV5(t) der zeitabhängige Versorgungsspannungsverlauf für einen abgesetzten Sensor bei der Übertragung einer auszusendenden Signalform über die Versorgungsleitungen des Sensors nach einer vierten Ausführungsform der Erfindung gezeigt. Die während der Übertragung der Signalform abgesenkte maximale Versorgungsspannung UV5ₘₐₓ(t1 < t < t2) dient hierbei als Maß für die Signalstärke.

Die in den Figuren 2 bis 5 dargestellten Ausführungsformen des erfindungsgemäßen Verfahren sind entsprechend insbesondere auch für UVₘₐₓ(t=0) < UB(t=0) gültig.

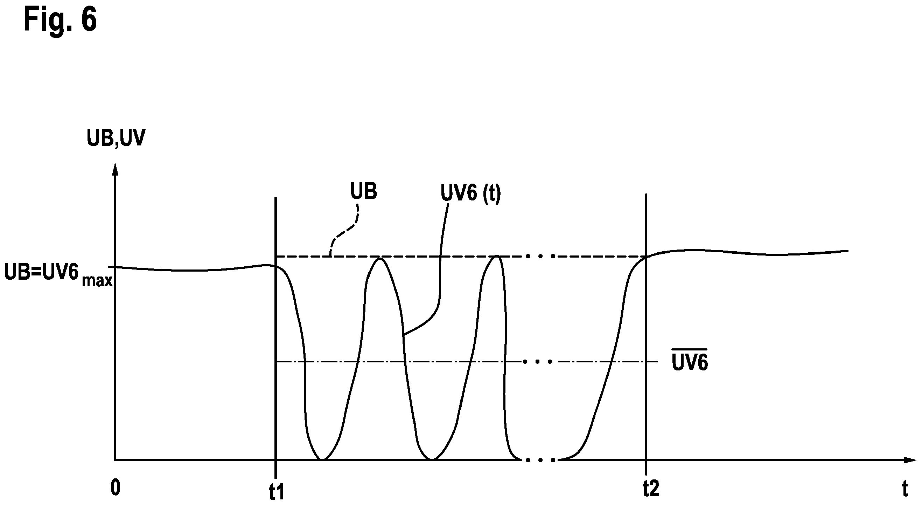

In der Figur 6 ist mit UV6(t) einen zeitabhängiger Versorgungsspannungsverlauf für einen abgesetzten Sensor bei der Übertragung einer auszusendenden Signalform über die Versorgungsleitungen des Sensors nach einer fünften Ausführungsform der Erfindung gezeigt.

Die in der Figur 6 dargestellte fünfte Ausführungsform des erfindungsgemäßen Verfahrens unterscheidet sich gegenüber dem in der Figur 1 dargestellten Versorgungsspannungsverlauf UV1(t) dadurch, dass die während der Übertragung der auszusendenden Signalform eingestellte maximale Versorgungsspannung UV6ₘₐₓ(t1 < t < t2) dem Verlauf der geglätteten Batteriespannung UB entspricht. In der Figur 1 ist die während der Übertragung der auszusendenden Signalform eingestellte maximale Versorgungsspannung UV1ₘₐₓ(t1 < t < t2) kleiner als die Batteriespannung UB.

Bei den in den Figuren 4, 5 und 6 dargestellten Ausführungsformen des erfindungsgemäßen Verfahrens kann die Versorgungsspannung während der Übertragung der Signalform über den gesamten Spannungsbereich der an dem Sensor während der Übertragung der Signalform anliegenden maximalen Versorgungsspannung UVₘₐₓ(t1 < t < t2) schwanken, wobei die maximale Stärke der Versorgungsspannung während der Übertragung UVₘₐₓ(t1 < t < t2) der Signalform ein Maß für die Stärke der auszusendenden Signalform ist.

Alternative Zuordnungen von Signalstärken zu den in den Figuren 2 bis 6 gezeigten Verläufen der Versorgungsspannungen UV(t) sind jedoch auch denkbar. Ebenso entspricht ein Unterschreiten der Nulllinie oder ein Überschreiten der außerhalb der Übertragung der Signalformen üblichen Versorgungsspannung UVₘₐₓ(0 < t < t1, t > t2) einem erfindungsgemäßen Verfahren, bei dem zur Übermittlung der auszusendenden Signalform die Spannung auf der Versorgungsleitung der Sendeeinrichtung UV(t) um einen Bruchteil der maximalen Versorgungsspannung UVₘₐₓ(t) der Sendeinrichtung variiert wird. Ein Unterschreiten der Nulllinie oder ein Überschreiten der außerhalb der Übertragung der Signalformen üblichen Versorgungsspannung UVₘₐₓ(0 < t < t1, t > t2) kann beispielsweise durch das Speichern von Spannung oder von Strom in Kondensatoren oder Spulen erfolgen.

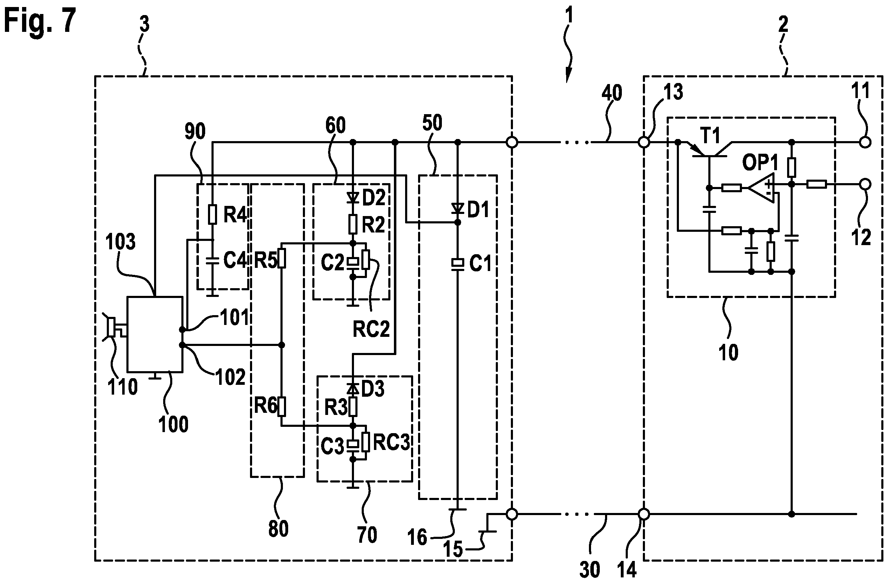

In der Figur 7 ist ein Prinzipschaltbild einer erfindungsgemäßen Vorrichtung 1 zum Durchführen eines erfindungsgemäßen Verfahrens nach einer sechsten Ausführungsform der Erfindung dargestellt.

Figur 7 zeigt, wie von einer Einheit 2, wie insbesondere einer Steuer- und Verarbeitungseinheit (SG) 2, über die Versorgungsleitung 30, 40 eines abgesetzten Sensors 3 die von dem Sensor 3 mittels einer Abstrahlvorrichtung (Sendeeinrichtung) 110 zu sendenden Signalformen übertragen werden, nämlich indem die zwischen einem Ende 13 einer Versorgungsleitung 40 und einem Ende 14 der anderen Versorgungsleitung 30 anliegende Versorgungsspannung UV(t) des Sensors 3 moduliert wird.

Die Versorgungsleitungen 30, 40 werden dazu mittels eines Treibers 10 angesteuert. Im abgesetzten Sensor 3 sichert eine Energieversorgungseinrichtung 50 die Sensorversorgung. Mittels eines Maximalwertdetektors 60 und eines Minimalwertdetektors 70 wird die bei der Übertragung der Signalform vorherrschenden Spannungsmaxima und Spannungsminima auf der Versorgungsleitung detektiert. In einer Referenzsignalerzeugung (Referenzeinrichtung) 80 wird ein Referenzsignal erzeugt, mit dessen Hilfe in der auch als Endstufe bezeichneten Verarbeitungsvorrichtung 100 aus dem Verlauf der Versorgungsspannung UV(t), die vorzugsweise vorher mittels eines Filters (Signalaufbereitungseinrichtung) 90 aufbereitet wurde, den Zeitverlauf und die Stärke des auszusendenden Signals bestimmt werden können.

Liegt an dem Eingang ("IN") 12 des Treibers 10 kein Signal an, so steuert der OP1 den Transistor T1 durch. Nahezu die volle Batteriespannung UB liegt an dem Eingang 11 des Treibers 10 und somit auf der Versorgungsleitung 40 des Sensors 3 an. Durch eine Variation der Spannung an dem Eingang 12 ("IN") des Treibers 10 kann die Versorgungsspannung UV(t) gemäß den Darstellungen aus den Figuren 2 bis 6 variiert werden. Die von dem Treiber 10 umfassten Widerstände (nicht gekennzeichnet) und Kondensatoren (nicht gekennzeichnet) dienen der Glättung und der Filterung der Batteriespannung UB und entsprechend auch der Versorgungsspannung UV(t).

In dem abgesetzten Sensor 3 umfasst die Energieversorgungseinrichtung 50 eine Gleichrichterdiode D1 und einen Pufferkondensator C1, mittels deren die Energieversorgung des Sensors 3 sichergestellt wird. Weitere Filterungen mit Keramikkondensatoren, Induktivitäten, Spannungsreglern, usw. sind auch einsetzbar, werden hier aber nicht detailliert dargestellt.

Durch eine Gleichrichtung und eine Tiefpassfilterung werden in dem Maximumwert- 60 und dem Maximumwertdetektor 70 die Peakwerte der Versorgungsspannung UV(t) gewonnen und gespeichert. Bei der in der Figur 7 dargestellten Ausführungsform der Erfindung umfasst die Referenzwerteinrichtung 80 nur ein Widerstandsnetzwerk. Der Referenzwert (Ref) wird der nachfolgenden Endstufe 100 an einem Eingang 102 bereitgestellt. Der Filter (Signalaufbereitungseinrichtung) 90 umfasst insbesondere einen Tiefpass, der die über die Versorgungsleitung eingekoppelten hochfrequenten Störungen von der Versorgungsspannung UV(t) fernhält. Die Endstufe 100 ist an einem Eingang 101 mit dem Filter 90 und an einem Eingang 103 mit der Energieversorgungseinrichtung 50 jeweils elektrisch verbunden.

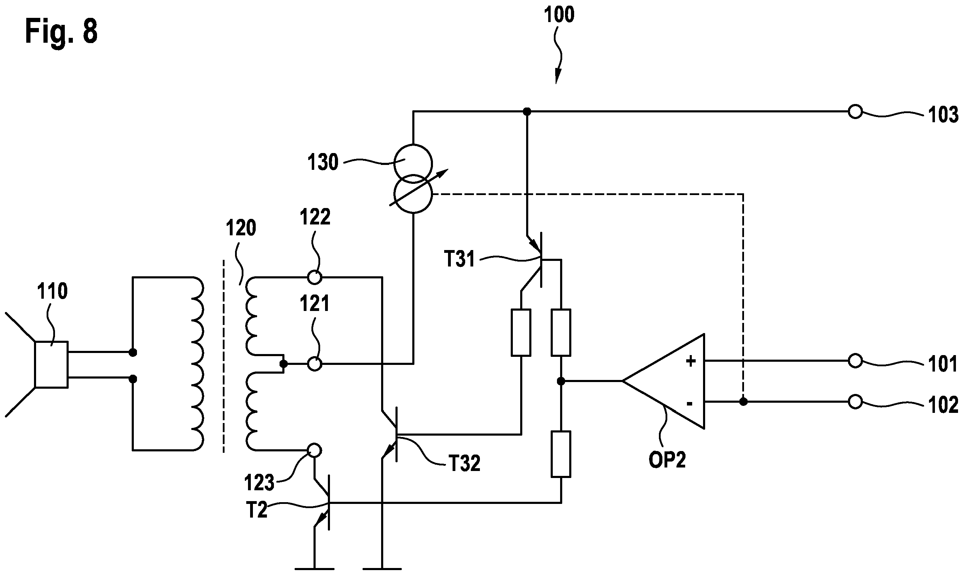

In der Figur 8 ist ein detailliertes Prinzipschaltbild der auch als Endstufe bezeichnete Verarbeitungsvorrichtung 100 der erfindungsgemäßen Vorrichtung 1 aus der Figur 7 dargestellt.

Insbesondere bei Ultraschallsensoren ist es üblich, mittels eines Übertragers (Ü) 120 die hohe Impedanz des Elektro-Akustik-Wandlers (LPS) 110 an die heute üblichen elektronischen Bauelemente anzupassen. In dem in der Figur 8 dargestellten Prinzipschaltbild ist der Mittelabgriff 121 des Übertragers 120 an eine steuerbare Stromquelle 130 angeschlossen, deren Stromstärke von der Referenzspannung Ref abgeleitet wird.

Der Operationsverstärker OP2 arbeitet in diesem Fall als Schwellwertschalter, der je nach Verhältnis des Momentanwerts der an dem Eingang 101 der Endstufe 100 anliegenden Versorgungsspannung UV(t) zu der an dem Eingang 102 der Endstufe anliegenden Referenzspannung Ref entweder gegen Masse oder gegen die an dem Eingang 103 der Endstufe 100 und durch die Energieversorgungseinrichtung 50 aufbereitete Sensorversorgungsspannung UV schaltet. Je nach Lage der Ausgangsspannung des Operationsverstärkers OP2 werden entweder der Transistor T2 oder die Transistoren T31 und T32 durchgeschaltet, wodurch in dem Übertrager 120 ein durch die einstellbare Strombegrenzung begrenztes variables Feld erzeugt wird, mittels dessen die Abstrahlvorrichtung (Sendeeinrichtung) 110 angesteuert wird.

In der Figur 8 sind zwischen dem Ausgang des Operationsverstärkers OP2 und Masse, zwischen dem Ausgang des Operationsverstärkers OP2 und der Basis des Transistors T31, zwischen dem Kollektor des Transistors T31 und der Basis des Transistors T32 jeweils einen Widerstand (nicht gekennzeichnet) geschaltet. Ein Abgriff 122 des Übertragers 120 ist mit dem Kollektor des Transistors T32 elektrisch verbunden, und ein weiterer Abgriff 123 des Übertragers 120 ist mit dem Kollektor des Transistors T2 elektrisch verbunden. Der Eingang 103 der Endstufe100 ist mit der Stromquelle 130 und mit der Basis des Transistors T31 verbunden.

Neben den bisher dargestellten Ausführungsformen des erfindungsgemäßen Verfahrens zur Übertragung von Signalformen kann alternativ auch ein mittels eines Mikrocontrollers gesteuerter und entsprechend mit üblichen digitalen Komponenten ausgestatteter Sensor in einer erfindungsgemäßen Vorrichtung verwendet werden. Anstelle von Bipolartransistoren können alternativ auch Feldeffekttransistoren zum Einsatz kommen.

Neben der voranstehenden schriftlichen Offenbarung wird hiermit zur weiteren Offenbarung der Erfindung ergänzend ausdrücklich auf die Darstellungen in den Figuren 1 bis 8 Bezug genommen.

## Patentansprüche

1. Verfahren zur Übertragung mindestens einer vorbestimmten Signalform zur Umfelderfassung von Fahrzeugen, wobei die Übertragung der mindestens einen vorbestimmten Signalform von einer Steuereinrichtung (2) an eine räumlich abgesetzte Sendeeinrichtung (110) zum Aussenden mindestens eines Signals mit der vorbestimmten Signalform, bei dem die vorbestimmte Signalform über eine Versorgungsleitung (30, 40) der Sendeeinrichtung (110) übertragen wird, **dadurch gekennzeichnet, dass** zur Übermittlung der vorbestimmten Signalform die Spannung (UV(t)) auf der Versorgungsleitung (30, 40) mittels der Steuereinrichtung (2) um einen Bruchteil einer maximalen Versorgungsspannung (UVₘₐₓ(t)) der Sendeinrichtung (110) variiert wird.

2. Verfahren nach Anspruch 1, **dadurch gekennzeichnet, dass** zur Übertragung der vorbestimmten Signalform die Versorgungsspannung (UV(t)) abgesenkt wird, wobei die Versorgungsspannung (UV(t)) nicht bis auf Null abgesenkt wird.

3. Verfahren nach Anspruch 1 oder 2, **dadurch gekennzeichnet, dass** während der Übertragung der vorbestimmten Signalform eine vorbestimmte Stärke des von der Sendeeinrichtung (110) auszusendenden Signals mittels eines Mittelwertes der Versorgungsspannung (UV (t1 < t < t2)) mitgeteilt wird.

4. Verfahren nach Anspruch 1 oder 2, **dadurch gekennzeichnet, dass** während der Übertragung der vorbestimmten Signalform eine vorbestimmte Stärke des von der Sendeeinrichtung (110) auszusendenden Signals mitgeteilt wird.

5. Verfahren nach einem der vorhergehenden Ansprüche, **dadurch gekennzeichnet, dass** von der Sendeeinrichtung (110) mindestens ein akustisches oder elektromagnetisches Signal gemäß der vorbestimmten Signalform ausgesendet wird.

6. Verfahren nach einem der Ansprüche 3 oder 4, **dadurch gekennzeichnet, dass** von der Sendeeinrichtung (110) mindestens ein akustisches oder elektromagnetisches Signal mit der vorbestimmten Stärke des von der Sendeeinrichtung (110) auszusendenden Signals ausgesendet wird.

7. Verfahren nach einem der Ansprüche 3 oder 4, **dadurch gekennzeichnet, dass** von der Sendeeinrichtung (110) mindestens ein akustisches oder elektromagnetisches Signal gemäß der vorbestimmten Signalform und mit der vorbestimmten Stärke des von der Sendeeinrichtung (110) auszusendenden Signals ausgesendet wird.

8. Verfahren nach einem der Ansprüche 3 oder 4, **dadurch gekennzeichnet, dass** die von der Steuereinrichtung (2) übertragene vorbestimmte Signalform und vorbestimmte Stärke des von der Sendeeinrichtung (110) auszusendenden Signals vor dem Aussenden des von der Sendeeinrichtung (110) auszusendenden Signals zwischengespeichert wird und/oder das von der Sendeeinrichtung (110) auszusendende Signal zeitversetzt gegenüber dem Zeitpunkt ((t1 < t < t2)) der Übertragung der vorbestimmten Signalform und Stärke ausgesendet wird.

9. Vorrichtung (1) zum Durchführen eines Verfahrens nach einem der vorangehenden Ansprüche, **gekennzeichnet durch** mindestens eine räumlich abgesetzte Sendeeinrichtung (110) zum Aussenden mindestens eines akustischen oder elektromagnetischen Signals und eine Steuereinrichtung (2), die dazu ausgebildet ist, eine derartig modulierte Versorgungsspannung (UV(t)) für die Sendeeinrichtung zu erzeugen, insbesondere mittels eines Leitungstreibers (10) zum Ansteuern von einer Versorgungsleitung (30, 40) der Sendeeinrichtung, dass eine vorbestimmte Signalform für das von der Sendeeinrichtung (110) auszusendende Signal mittels der modulierten Versorgungsspannung (UV(t)) von der Steuereinrichtung (2) an die Sendeeinrichtung (110) übertragen werden kann.

10. Vorrichtung (1) nach Anspruch 9, **dadurch gekennzeichnet, dass** die Vorrichtung (1) eine Energieversorgungseinrichtung (50) zur Energieversorgung der Sendeeinrichtung (110) umfasst und die Steuereinrichtung (2) dazu ausgebildet ist, die erzeugte Versorgungsspannung (UV(t)) der Energieversorgungseinrichtung (50) bereitzustellen.

11. Vorrichtung (1) nach einem der Ansprüche 9 oder 10, **gekennzeichnet dadurch, dass** die Vorrichtung (1) mindestens einen Detektor, beispielsweise einen Maximumwertdetektor (60) und einen Minimumwertdetektor (70), umfasst, der dazu ausgebildet ist, eine Information über den Verlauf der Spannung (UV(t)) auf der Versorgungsleitung (30, 40) zu ermitteln, und eine Verarbeitungsvorrichtung (100) umfasst, die dazu ausgebildet ist, zumindest eine vorbestimmte Signalstärke des von der Sendeeinrichtung auszusendenden Signals anhand der ermittelten Information zu bestimmen.

12. Vorrichtung (1) nach Anspruch 11, die ferner eine Signalaufbereitungseinrichtung (90) aufweist, wobei die Verarbeitungseinrichtung (100) dazu ausgebildet ist, die vorbestimmte Signalstärke des von der Sendeeinrichtung auszusendenden Signals anhand der ermittelten Information über den Verlauf einer mittels der Signalaufbereitungseinrichtung (90) vorgefilterten Spannung (UV(t)) zu bestimmen.

13. Vorrichtung (1) nach Anspruch 11 oder 12, **dadurch gekennzeichnet, dass** die Vorrichtung (1) eine Referenzeinrichtung (80) umfasst, die dazu ausgebildet ist, mindestens ein Referenzsignal zu erzeugen und der Verarbeitungsvorrichtung (100) bereitzustellen, wobei die Verarbeitungseinrichtung (100) weiter dazu ausgebildet ist, die vorbestimmte Signalform und/oder Signalstärke des mittels der Sendeeinrichtung auszusendenden Signals mittels des Referenzsignals und mittels der ermittelten Information über den Verlauf der Spannung (UV(t)) der Versorgungsleitung (30, 40) zu bestimmen.

14. Vorrichtung (1) nach einem der Ansprüche 9 bis 13, **dadurch gekennzeichnet, dass** die Vorrichtung (1) eine Speichereinrichtung umfasst zum Zwischenspeichern der vorbestimmten und von der Steuereinrichtung (2) hin zu der Sendeeinrichtung (110) übertragenen Signalform und/oder Signalstärke vor der Aussendung des auszusendenden Signals mit der übertragenen vorbestimmten Signalform und Stärke mittels der Sendeeinrichtung (110).

15. Fahrerassistenzsystem mit einer Vorrichtung (1) nach einem der Ansprüche 9 bis 14.

## Claims

1. Method for transmitting at least one predetermined signal form for sensing the surroundings of vehicles, wherein the transmission of the at least one predetermined signal form from a control device (2) to a physically remote transmission device (110) for transmitting at least one signal having a predetermined signal form, in which the predetermined signal form is transmitted via a supply line (30, 40) of the transmission device (110), **characterized in that** the predetermined signal form is transmitted by virtue of the voltage (UV(t)) on the supply line (30, 40) being varied by means of the control device (2) by a fraction of a maximum supply voltage (UVₘₐₓ(t)) of the transmission device (110).

2. Method according to Claim 1, **characterized in that** the predetermined signal form is transmitted by virtue of the supply voltage (UV(t)) being lowered, wherein the supply voltage (UV(t)) is not lowered to zero.

3. Method according to Claim 1 or 2, **characterized in that** during the transmission of the predetermined signal form a predetermined strength of the signal to be transmitted by the transmission device (110) is communicated by means of a mean value of the supply voltage (UV (t1 < t < t2)).

4. Method according to Claim 1 or 2, **characterized in that** during the transmission of the predetermined signal form a predetermined strength of the signal to be transmitted by the transmission device (110) is communicated.

5. Method according to one of the preceding claims, **characterized in that** the transmission device (110) transmits at least one audible or electromagnetic signal according to the predetermined signal form.

6. Method according to either of Claims 3 and 4, **characterized in that** the transmission device (110) transmits at least one audible or electromagnetic signal at the predetermined strength of the signal to be transmitted by the transmission device (110).

7. Method according to either of Claims 3 and 4, **characterized in that** the transmission device (110) transmits at least one audible or electromagnetic signal according to the predetermined signal form and at the predetermined strength of the signal to be transmitted by the transmission device (110).

8. Method according to either of Claims 3 and 4, **characterized in that** the predetermined signal form transmitted by the control device (2) and the predetermined strength of the signal to be transmitted by the transmission device (110) are buffer-stored before the signal to be transmitted by the transmission device (110) is transmitted, and/or the signal to be transmitted via the transmission device (110) is transmitted with a time stagger relative to the time ((t1 < t < t2)) of the transmission of the predetermined signal form and strength.

9. Apparatus (1) for performing a method according to one of the preceding claims, **characterized by** at least one physically remote transmission device (110) for transmitting at least one audible or electromagnetic signal and a control device (2) configured to produce, particularly by means of a line driver (10) for actuating a supply line (30, 40) of the transmission device, a supply voltage (UV(t)) for the transmission device that is modulated such that a predetermined signal form for the signal to be transmitted by the transmission signal (110) can be transmitted from the control device (2) to the transmission device (110) by means of the modulated supply voltage (UV(t)).

10. Apparatus (1) according to Claim 9, **characterized in that** the apparatus (1) comprises a power supply device (50) for supplying power to the transmission device (110), and the control device (2) is configured to provide the supply voltage (UV(t)) produced to the power supply device (50).

11. Apparatus (1) according to either of Claims 9 and 10, **characterized in that** the apparatus (1) comprises at least one detector, for example a maximum value detector (60) and a minimum value detector (70), configured to ascertain a piece of information about the profile of the voltage (UV(t)) on the supply line (30, 40), and comprises a processing apparatus (100) configured to determine at least one predetermined signal strength of the signal to be transmitted by the transmission device on the basis of the ascertained information.

12. Apparatus (1) according to Claim 11, which further has a signal conditioning device (90) wherein the processing apparatus (100) is configured to determine the predetermined signal strength of the signal to be transmitted by the transmission device on the basis of the ascertained information about the profile of a voltage (UV(t)) prefiltered by means of the signal conditioning device (90).

13. Apparatus (1) according to Claim 11 or 12, **characterized in that** the apparatus (1) comprises a reference device (80) configured to produce at least one reference signal and to provide it to the processing apparatus (100, wherein the processing apparatus (100) is further configured to determine the predetermined signal form and/or signal strength of the signal to be transmitted by means of the transmission device by means of the reference signal and by means of the ascertained information about the profile of the voltage (UV(t)) of the supply line (30, 40).

14. Apparatus (1) according to one of Claims 9 to 13, **characterized in that** the apparatus (1) comprises a memory device for buffer-storing the predetermined signal form and/or signal strength transmitted from the control device (2) to the transmission device (110) before the signal to be transmitted is transmitted with the transmitted predetermined signal form and strength by means of the transmission device (110).

15. Driver assistance system having an apparatus (1) according to one of Claims 9 to 14.

## Revendications

1. Procédé de transmission d'au moins une forme de signal prédéterminée pour la détection de l'environnement des véhicules, dans lequel la transmission de l'au moins une forme de signal prédéterminée depuis un dispositif de commande (2) vers un dispositif d'émission (110) spatialement distant pour émettre au moins un signal présentant la forme de signal prédéterminée, dans lequel la forme de signal prédéterminée est transmise via une ligne d'alimentation (30, 40) du dispositif d'émission (110), **caractérisé en ce que**, pour transmettre la forme de signal prédéterminée, la tension (UV(t)) sur la ligne d'alimentation (30, 40) est amenée à varier d'une fraction d'une tension d'alimentation maximale (UVₘₐₓ(t)) du dispositif d'émission (110) au moyen du dispositif de commande (2).

2. Procédé selon la revendication 1, **caractérisé en ce que**, pour transmettre la forme de signal prédéterminée, la tension d'alimentation (UV(t)) est abaissée, dans lequel la tension d'alimentation (UV(t)) n'est notamment pas abaissée jusqu'à zéro.

3. Procédé selon la revendication 1 ou 2, **caractérisé en ce que**, pendant la transmission de la forme de signal prédéterminée, une intensité prédéterminée du signal devant être émis par le dispositif d'émission (110) est communiquée au moyen d'une valeur moyenne de la tension d'alimentation (UV(t1 < t < t2)).

4. Procédé selon la revendication 1 ou 2, **caractérisé en ce que**, pendant la transmission de la forme de signal prédéterminée, une intensité prédéterminée du signal devant être émis par le dispositif d'émission (110) est communiquée.

5. Procédé selon l'une des revendications précédentes, **caractérisé en ce qu'**au moins un signal acoustique ou électromagnétique présentant la forme de signal prédéterminée est émis par le dispositif d'émission (110).

6. Procédé selon l'une des revendications 3 ou 4, **caractérisé en ce qu'**au moins un signal acoustique ou électromagnétique présentant l'intensité prédéterminée du signal devant être émis par le dispositif d'émission (110) est émis par le dispositif d'émission (110).

7. Procédé selon l'une des revendications 3 ou 4, **caractérisé en ce qu'**au moins un signal acoustique ou électromagnétique présentant la forme de signal prédéterminée et ayant l'intensité prédéterminée du signal devant être émis par le dispositif d'émission (110) est émis par le dispositif d'émission (110).

8. Procédé selon l'une des revendications 3 ou 4, **caractérisé en ce que** la forme de signal prédéterminée et l'intensité prédéterminée transmise par le dispositif de commande (2), du signal devant être émis par le dispositif d'émission (110), sont temporairement mémorisées avant l'émissions du signal devant être émis par le dispositif d'émission (110) et/ou **en ce que** le signal devant être émis par le dispositif d'émission (110) est émis avec un temps de retard par rapport au temps ((t1 < t < t2)) de la transmission de la forme de signal et de l'intensité prédéterminées.

9. Dispositif (1) destiné à mettre en oeuvre un procédé selon l'une des revendications précédentes, **caractérisé par** au moins un dispositif d'émission (110) spatialement distant destiné à émettre au moins un signal acoustique ou électromagnétique et un dispositif de commande (2) qui est conçu pour générer une tension d'alimentation modulée (UV(t)) pour le dispositif d'émission, en particulier au moyen d'un circuit d'attaque de ligne (10), pour commander une ligne d'alimentation (30, 40) du dispositif d'émission, de manière à ce qu'une forme de signal prédéterminée pour le signal devant être émis par le dispositif d'émission (110) puisse être transmise au moyen de la tension d'alimentation modulée (UV(t)) depuis le dispositif de commande (2) vers le dispositif d'émission (110).

10. Dispositif (1) selon la revendication 9, **caractérisé en ce que** le dispositif (1) comprend un dispositif d'alimentation en énergie (50) destiné à alimenter en énergie le dispositif d'émission (110) et **en ce que** le dispositif de commande (2) est conçu pour fournir la tension d'alimentation (UV(t)) générée au dispositif d'alimentation en énergie (50).

11. Dispositif (1) selon l'une des revendications 9 ou 10, **caractérisé en ce que** le dispositif (1) comprend au moins un détecteur, par exemple un détecteur de valeur maximale (60) et un détecteur de valeur minimale (70), qui est conçu pour déterminer une information concernant l'évolution de la tension (UV(t)) sur la ligne d'alimentation (30, 40), et comprend un dispositif de traitement (100) qui est conçu pour déterminer à partir de l'information déterminée au moins une intensité de signal prédéterminée du signal devant être émis par le dispositif d'émission.

12. Dispositif (1) selon la revendication 11, comprenant en outre un moyen de conditionnement du signal (90), dans lequel le dispositif de traitement (100) est conçu pour déterminer l'intensité de signal prédéterminée du signal devant être émis par le dispositif d'émission à partir de l'information déterminée concernant l'évolution d'une tension (UV(t)) préfiltrée par le dispositif de conditionnement du signal (90).

13. Dispositif (1) selon la revendication 11 ou 12, **caractérisé en ce que** le dispositif (1) comprend un dispositif de référence (80) conçu pour générer au moins un signal de référence et pour le fournir au dispositif de traitement (100), dans lequel le dispositif de traitement (100) est en outre conçu pour déterminer la forme de signal et/ou l'intensité de signal prédéterminée(s) du signal devant être émis par le dispositif d'émission au moyen du signal de référence et au moyen de l'information déterminée concernant l'évolution de la tension (UV(t)) de la ligne d'alimentation (30, 40).

14. Dispositif (1) selon l'une des revendications 9 à 13, **caractérisé en ce que** le dispositif (1) comprend un dispositif à mémoire destiné à stocker temporairement la forme de signal et/ou l'intensité de signal prédéterminée(s) transmise(s) depuis le dispositif de commande (2) vers le dispositif d'émission (110) avant l'émission au moyen du dispositif d'émission (110) du signal devant être émis présentant la forme de signal et l'intensité prédéterminée(s) transmise(s).

15. Système d'assistance à la conduite comprenant un dispositif (1) selon l'une des revendications 9 à 14.
